Europäisches Patentamt

European Patent Office ·

Office européen des brevets

(19)

(11) Veröffentlichungsnummer : **0 135 857**
**B1**

(12)　　　　　　　　　**EUROPÄISCHE PATENTSCHRIFT**

(45) Veröffentlichungstag der Patentschrift :
02.12.87

(51) Int. Cl.⁴ : **B 60 G   9/00**

(21) Anmeldenummer : **84110483.9**

(22) Anmeldetag : **04.09.84**

---

(54) Aufhängung einer Starrachse für Fahrzeuge.

---

(30) Priorität : **17.09.83 DE 3333706**

(43) Veröffentlichungstag der Anmeldung :
**03.04.85 Patentblatt 85/14**

(45) Bekanntmachung des Hinweises auf die Patenterteilung : **02.12.87 Patentblatt 87/49**

(84) Benannte Vertragsstaaten :
**FR GB IT SE**

(56) Entgegenhaltungen :
**DE-A- 2 263 374**
**FR-A-  705 786**
**FR-A-  810 570**
**FR-A- 1 396 781**
**FR-A- 2 026 837**
**FR-A- 2 225 301**
**GB-A-  166 534**
**GB-A-  644 131**
**GB-A- 1 373 957**
**GB-A- 1 588 275**

(73) Patentinhaber : **BAYERISCHE MOTOREN WERKE**
**Aktiengesellschaft**
**Postfach 40 02 40 Petuelring 130 - AJ-36**
**D-8000 München 40 (DE)**

(72) Erfinder : **Matschinsky, Wolfgang**
**Korbinianplatz 9**
**D-8000 München 40 (DE)**

(74) Vertreter : **Dexheimer, Rolf**
**Bayerische Motoren Werke Aktiengesellschaft Post-**
**fach 40 02 40 Petuelring 130 - AJ-21**
**D-8000 München 40 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung bezieht sich auf eine Aufhängung einer Starrachse für Fahrzeuge, mit einem sich im wesentlichen quer zur Fahrtrichtung erstreckenden torsionssteifen Achskörper, an dessen beiden Enden je ein Rad gelagert ist und der mit dem Fahrzeugaufbau o. dgl. über zwei seitliche biege- und torsionssteife Längsarme und eine Seitenführungseinrichtung (Panhardstab, Wattgestänge) verbunden und geführt ist, wobei die Längsarme in gummielastischen Drehlagern mit annähernd quer und horizontal angeordneter Schwenkachse am Fahrzeugaufbau angelenkt und mit dem Achskörper ebenfalls über gummielastische Drehlager verbunden sind.

Eine Aufhängung einer Starrachse dieser Art ist aus der GB-A-1 373 957 bekannt. Die Längsarme dieser Starrachse sind sowohl mit dem Fahrzeugaufbau als auch mit dem Achskörper jeweils über einfache Gummilager verbunden. Damit die bekannte Achse insbesondere unter dem Einfluß von Querkräften keine Lenkbewegungen um den Verbindungspunkt mit dem Wattgestänge ausführt, ist das einstückig mit dem Achskörper verbundene Hinterachsgetriebegehäuse vergleichsweise weit in Fahrtrichtung nach vorne verlängert und dort über ein elastisches Lager mit einem Querträger verbunden, der seinerseits an seinen beiden Enden elastisch am Fahrzeugaufbau abgestützt ist. Um Längsstöße federnd abfangen zu können, muß dabei der erwähnte Querträger auch begrenzt Schwenkbewegungen um seine Abstützpunkte am Fahrzeugaufbau durchführen können. Diese Bauweise ist sehr aufwendig und erfordert einen äußerst hohen Raumbedarf auf der Fahrzeugunterseite vor dem Achskörper.

Es ist ferner eine Starrachs-Aufhängung etwas anderer Art bekannt, bei der die Längsarme fest mit dem Achskörper verbunden sind. Der Achskörper selbst muß daher torsionsweich ausgebildet werden, um eine gegensinnige Ein- und Ausfederungsbewegung der Fahrzeugräder bei Kurvenfahrt oder welliger Fahrbahn zu ermöglichen.

Die torsionsweichen Achskörper dieser Bauart mit fest verbundenen Längsarmen ergeben hohe Materialbelastungen an den Verbindungsstellen zwischen Achskörper und Längsarmen, die die zulässige Verschränkung der Längsarme und damit die Federwege bei Kurvenfahrt begrenzen.

Bei schweren Fahrzeugen wird darüber hinaus die Dimensionierung der Teile schwierig. Die Längsarme sind weiterhin üblicherweise als vertikal angeordnete Federblätter ausgebildet und häufig nicht zur Abstützung von Federn und Dämpfern geeignet.

Es ist ferner bekannt, etwa bei Hinterachsen von Geländewagen, die Längsarme breitbasig an je zwei in Fahrtrichtung hintereinander angeordneten elastischen Lagern mit dem Achskörper zu verbinden. Eine Verschränkung der beiden Längsarme ist dann durch Verformung der Lager gegeneinander möglich.

Die elastische, verschränkbare Verbindung der Längsarme mit einem torsionssteifen Achskörper hat den Nachteil, daß die zwischen Achskörper und Längsarmen zugelassene elastische Verschwenkung sich auch beim Aufbringen von Brems- und Antriebsmomenten auf den Achskörper auswirkt. Der Achskörper kann sich elastisch « aufziehen » und ist außerdem der Gefahr von Drehschwingungen beim Bremsen und Beschleunigen ausgesetzt. Ferner vergrößern die elastischen Verdrehwinkel des Achskörpers die Beugewinkel der Kardanwelle.

Der Erfindung liegt die Aufgabe zugrunde, eine Aufhängung einer Starrachse für Fahrzeuge der eingangs genannten Gattung zu schaffen, die eine möglichst einfache Bauart hat und trotzdem die geschilderten Mängel hinsichtlich Federweg, Belastbarkeit und elastischem Aufziehen vermeidet.

Diese Aufgabe wird erfindungsgemäß mit einer Aufhängung einer Starrachse der vorausgesetzten Gattung dadurch gelöst, daß sowohl die aufbauseitigen Drehlager als auch die achskörperseitigen Drehlager jeweils durch zwei in axialem Abstand voneinander angeordnete Gummilager gebildet sind, und daß die Drehachsen der achskörperseitigen Drehlager in Draufsicht schräg verlaufen und sich mit den aufbauseitigen Schwenkachsen der Längsarme etwa in der Fahrzeugmittelebene zumindest annähernd in einem Punkt schneiden. Dank dieser Maßnahmen läßt sich sowohl für angetriebene als auch für nichtangetriebene starre Achsen eine raumsparende Bauweise mit tief angeordneten Lenkern verwirklichen. Mit der erfindungsgemäßen Ausbildung und Anordnung der Längsarmlager ist eine einfache und raumsparende Bauweise möglich und die Aufhängung arbeitet in allen Betriebszuständen kinematisch nahezu exakt, so daß nur sekundäre, geringfügige elastische Verzwängungen der einzelnen Drehlager auftreten. In den Richtungen, wo dies erwünscht ist, lassen sich diese Lager daher fast beliebig steif ausbilden. Die Torsionsbelastung des Achskörpers wird vermieden, desgleichen eine Federwegbeschränkung durch unzulässige Verformungen des Achskörpers oder der Längsarme. Die Aufhängung ist auch für beliebig hohe Belastungen geeignet.

Schließlich kann bei einer angetriebenen Starrachse das Ausgleichsgetriebe ohne Schwierigkeit an den torsionssteifen Achskörper angeschlossen bzw. in diesen integriert werden. Wegen der breitbasigen Drehlager und dank der biege- und torsionssteifen Längsarme ist dabei ferner das elastische « Aufziehen » beim Aufbringen von Antriebs- oder Bremsmomenten wesentlich herabgesetzt.

Die Erfindung und weitere vorteilhafte Einzelheiten der Erfindung, die Gegenstand von Unteransprüchen sind, sind im folgenden anhand von mehreren in der Zeichnung dargestellten Ausführungsbeispielen näher erläutert. Es zeigen

Fig. 1 eine Draufsicht auf ein erstes Ausführungsbeispiel einer erfindungsgemäßen Starrachsaufhängung;

Fig. 2 eine Teilansicht in Richtung des Pfeiles II in Fig. 1;

Fig. 3 eine Ansicht in Richtung des Pfeiles III in Fig. 2;

Fig. 4 eine Seitenansicht der Aufhängung nach Fig. 1;

Fig. 5 eine Draufsicht auf ein weiteres Ausführungsbeispiel und

Fig. 6 eine perspektivische Ansicht einer dritten Ausführungsform.

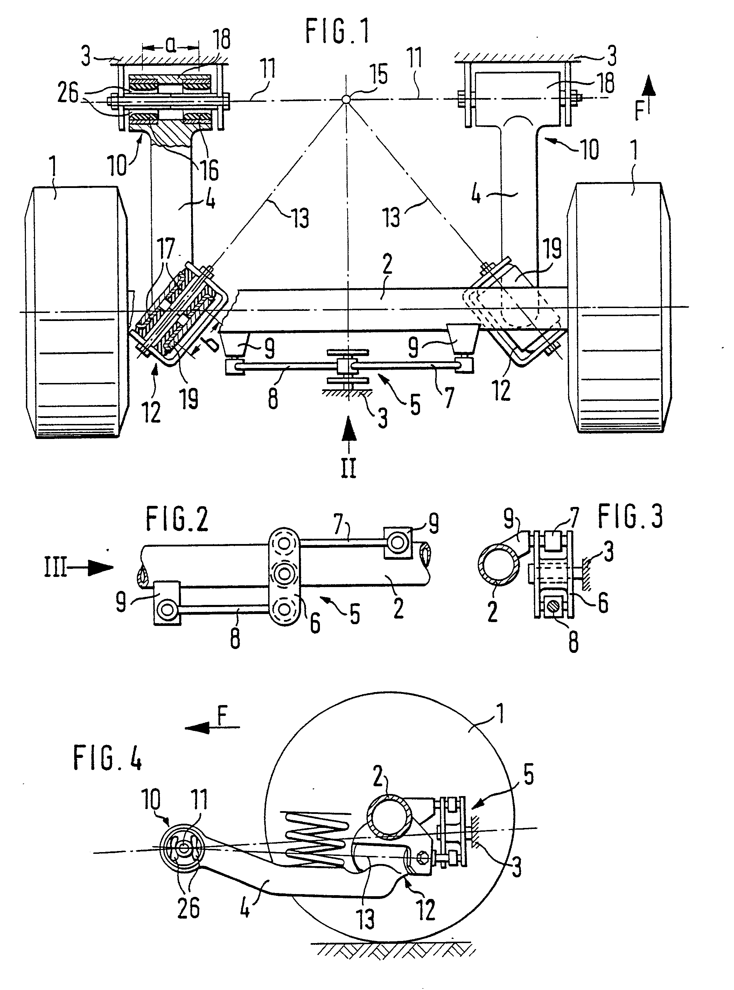

Die in den Fig. 1-4 dargestellte Aufhängung einer Starrachse dient für die nicht angetriebenen hinteren Räder 1 eines Personenkraftwagens. Sie umfaßt einen sich quer zur Fahrtrichtung F erstreckenden Achskörper 2, an dessen beiden Enden je ein Rad 1 gelagert ist. Der Achskörper 2 ist mit dem lediglich angedeuteten Fahrzeugaufbau 3 oder dergleichen über zwei seitliche Längslenker und eine Seitenführungseinrichtung 5 verbunden und geführt, die bei diesem Ausführungsbeispiel aus einem Wattgestänge besteht. Dieses Wattgestänge besteht aus einer in Normallage des Fahrzeugs etwa vertikalen und in ihrer Mitte fahrzeugaufbaufest gelagerten Koppel 6 an deren beiden Enden gelenkig eine obere und eine untere Stange 7 bzw. 8 angreifen, die an ihren entgegengesetzten Enden gelenkig mit Konsolen 9 des Achskörpers 2 verbunden sind.

Die beiden erwähnten Längslenker sind biege- und torsionssteife Längsarme 4, die in gummielastischen Drehlagern 10 mit breiter Lagerbasis a und quer und horizontal angeordneter Schwenkachse 11 am Fahrzeugaufbau 3 angelenkt sind. Die Längsarme 4 sind ferner mit dem torsionssteifen Achskörper 2 ebenfalls über gummielastische Drehlager 12 mit gleichfalls breiter Lagerbasis b verbunden deren Drehachsen 13 in Draufsicht (Fig. 1) schräg verlaufen und sich mit den aufbauseitigen Schwenkachsen der Längsarme 4 etwa in der Fahrzeugmittelebene 14 in einem Punkt 15 schneiden. Bei gleichsinnigem Einfedern der beiden Räder 1 schwenkt die gesamte Achse um die Drehachse 11 der beiden vorderen Drehlager 10 nach oben. Bei gegensinnigen Federungsbewegungen schwenkt einer der beiden Langsarme 4 nach oben, der andere nach unten, wobei relativ zum Achskörper 2 ebenfalls Verdrehbewegungen um die Drehachse 13 stattfinden. Da die beiden Drehachsen 13 sich mit der Schwenkachse 11 in einem gemeinsamen Schnittpunkt, dem Punkt 15, schneiden, treten hierbei keine nennenswerten Verzwängungen in sämtlichen Drehlagern 10 bzw. 12 auf.

Zum Erhalt der breiten Lagerbasis a bzw. b ist das Drehlager 10 bzw. das Drehlager 12 jeweils durch zwei in axialem Abstand voneinander angeordnete Gummilager 16 bzw. 17 ausgebildet. Die beiden Gummilager 16 sind in einem querverlaufenden Rohransatz 18 am vorderen Ende des Längsarms 4 aufgenommen, während die Gummilager 17 in einem entsprechend der Drehachse 13 schräg an das hintere Ende des Längsarms 4 fest angesetzten Rohrstück 19 jeweils eingesetzt sind.

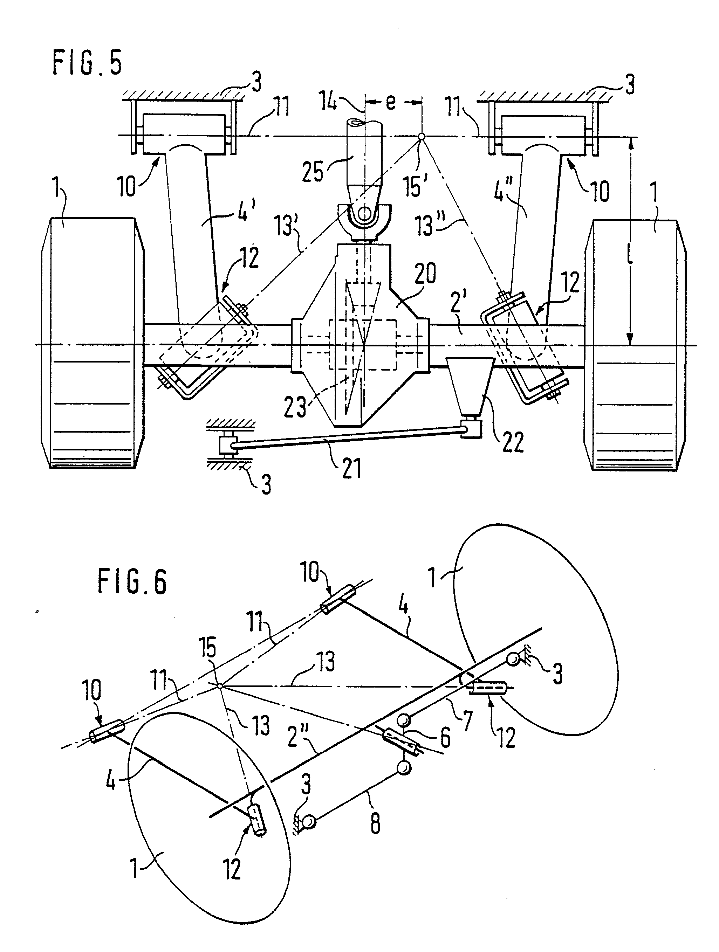

Bei dem in Fig. 5 dargestellten Ausführungsbeispiel handelt es sich um die hintere angetriebene Starrachse eines Kraftfahrzeugs. Das Ausgleichsgetriebegehäuse 20 und der eigentliche Achskörper 2' bilden dabei einen festen Verbund, der über einen Panhardstab 21 seitlich geführt ist, der einerseits am Fahrzeugaufbau 3, andererseits an einer Konsole 22 des Achskörpers 2' angelenkt ist.

Die in Draufsicht leicht von hinten innen nach vorne außen geneigten Längsarme 4' und 4" sind ebenfalls in der bereits anhand der Fig. 1-4 geschilderten Weise vorne in breitbasigen Drehlagern 10 am Fahrzeugaufbau angelenkt und hinten mit gleichfalls breitbasigen Drehlagern 12 mit ebenfalls breiter Lagerbasis mit dem Achskörper 2' gelenkig verbunden. Die Schwenkachsen 11 der vorderen Drehlager 10 der biege- und drehsteifen Längsarme 4' bzw. 4" schneiden sich mit den Drehachsen 13' bzw. 13" der hinteren Drehlager 12 nicht exakt in der Fahrzeugmittelebene 14 sondern in dem Punkt 15', der gegenüber der Fahrzeugmittelebene 14 seitlich versetzt ist. Der Punkt 15' ist dabei zu der dem (lediglich angedeuteten) Tellerrad 23 des Ausgleichsgetriebes abgewandten Seite hin versetzt. Der seitliche Versatz e beträgt I/i, wobei I der Längsabstand der aufbauseitigen Drehlager 10 von der Radachse 24 und e das Untersetzungsverhältnis des Ausgleichsgetriebes ist. Auf diese Weise kann die durch das Drehmoment der Kardanwelle 25 verursachte Radlastverlagerung ausgeglichen werden.

Die Kardanwelle 25 kann — im Gegensatz zur Darstellung nach Fig. 5 — auch mit einer elastischen Wellenkupplung, die nur kleine Beugewinkel ausgleicht, am Ausgleichsgetriebe angeflanscht werden, wenn die Gelenkwelle durch ein Wellengelenk geteilt ist, das etwa in der Drehachse 11 der fahrzeugaufbauseitigen Drehlager der Längsarme 4 bzw. 4' und 4" liegt.

Wie man in Fig. 1 und insbesondere in Fig. 4 erkennen kann, sind die aufbauseitigen gummielastischen Drehlager 10 in horizontaler Richtung mit Ausnehmungen 26 versehen, die eine weichere Abfederung von Längsstößen auf das Fahrzeug bewirken. In vertikaler Richtung sind alle Gummilager so steif als zulässig ausgebildet.

Aus der in Fig. 6 ersichtlichen Schemazeichnung geht hervor, daß die Schwenkachsen 11 und die Drehachsen 13 der Drehlager 10 bzw. 12 nicht in einer Ebene liegen müssen. Sie können so gegeneinander verschränkt sein, daß deren Schnittpunkt 15 unterhalb der aufbauseitigen Anlenkung der Längsarme 4 liegt.

Beim Ausführungsbeispiel nach Fig. 6 ist ferner die Koppel 6 des Wattgestänges am Achskörper 2" gelagert, während die der Koppel 6 abgewandten Enden der Stangen 7 bzw. 8 gelenkig mit dem Fahrzeugaufbau 3 verbunden sind. Das kinematische Eigenlenkverhalten des Fahrzeugs ändert sich dabei etwas mit dem Beladungszustand.

Ist dagegen, wie beim Ausführungsbeispiel nach den Fig. 1-5, die Seitenführungseinrichtung 5 ein Wattgestänge, dessen Koppel 6 am Fahrzeugaufbau 3 gelagert ist, so bewegen sich der Punkt 15 und der Lagerzapfen der Koppel 6 beim Ein — und Ausfedern etwa um den gleichen Betrag in vertikaler Richtung, wodurch das kinematische Eigenlenkverhalten etwa beladungsunabhängig wird.

**Patentansprüche**

1. Aufhängung einer Starrachse für Fahrzeuge, mit einem sich im wesentlichen quer zur Fahrtrichtung erstreckenden torsionssteifen Achskörper (2, 2', 2''), an dessen beiden Enden je ein Rad (1) gelagert ist und der mit dem Fahrzeugaufbau (3) o. dgl. über zwei seitliche, biege- und torsionssteife Längsarme (4, 4', 4'') und eine Seitenführungseinrichtung (Panhardstab 21, Wattgestänge 6, 7, 8) verbunden und geführt ist, wobei die Längsarme (4, 4', 4'') in gummielastischen Drehlagern (10) mit annähernd quer und horizontal angeordneter Schwenkachse (11) am Fahrzeugaufbau (3) angelenkt und mit dem Achskörper (2, 2', 2'') ebenfalls über gummielastische Drehlager (12) verbunden sind, dadurch gekennzeichnet, daß sowohl die aufbauseitigen Drehlager (10) als auch die achskörperseitigen Drehlager (12) jeweils durch zwei in axialem Abstand voneinander angeordnete Gummilager (16 bzw. 17) gebildet sind, und daß die Drehachsen (13, 13', 13'') der achskörperseitigen Drehlager (12) in Draufsicht schräg verlaufen und sich mit den aufbauseitigen Schwenkachsen (11) der Längsarme (4, 4', 4'') etwa in der Fahrzeugmittelebene (14) zumindest annähernd in einem Punkt (15, 15') schneiden.

2. Aufhängung nach Anspruch 1, als angetriebene Hinterachse für ein Kraftfahrzeug, bei der das Ausgleichsgetriebe sich am Achskörper abstützt, dadurch gekennzeichnet, daß der Schnittpunkt (15') der Drehachsen (13', 13'') und Schwenkachsen (11) gegenüber der Fahrzeuglängsmittelebene (14) zu der dem Tellerrad (23) des Ausgleichsgetriebes abgewandten Seite hin versetzt ist.

3. Aufhängung nach Anspruch 3, dadurch gekennzeichnet, daß der seitliche Versatz (e) l/i beträgt, wobei l der Längsabstand der aufbauseitigen Drehlager (10) von der Radachse (24) und i das Untersetzungsverhältnis des Ausgleichsgetriebes ist.

4. Aufhängung nach Anspruch 1, dadurch gekennzeichnet, daß die aufbauseitigen gummielastischen Drehlager (10) in horizontaler Richtung Ausnehmungen (26) aufweisen.

5. Aufhängung nach Anspruch 1, dadurch gekennzeichnet, daß die Drehachsen (13) und Schwenkachsen (11) so gegeneinander verschränkt sind, daß deren Schnittpunkt (15) unterhalb der aufbauseitigen Anlenkung (Drehlager 10) der Längsarme (4) liegt.

6. Aufhängung nach Anspruch 1, dadurch gekennzeichnet, daß die Seitenführungseinrichtung ein Wattgestänge ist, dessen Koppel (6) am Achskörper (2'') gelagert ist.

7. Aufhängung nach Anspruch 1, dadurch gekennzeichnet, daß die Seitenführungseinrichtung ein Wattgestänge ist, dessen Koppel (6) am Fahrzeugaufbau (3) gelagert ist.

**Claims**

1. A suspension system of a rigid axle for vehicles, comprising a torsionally rigid axle body (2, 2', 2'') extending substantially transversely of the direction of travel with a wheel (1) being mounted on each of the two ends of the axle body, which body is connected with the vehicle body (3) or the like and is guided by means of two lateral, flexurally and torsionally rigid longitudinal arms (4, 4', 4'') and a lateral guidance device (Panhard bar 21, Watt linkage 6, 7, 8), the longitudinal arms (4, 4', 4'') being articulated to the vehicle body (3) by rubber-elastic pivot bearings (10) with a substantially transversely and horizontally arranged pivot axis (11) and being likewise connected with the axle body (2, 2', 2'') through rubber-elastic pivot bearings (12), characterised in that both the pivot bearings (10) on the body and the pivot bearings (12) on the axle body are each formed by two rubber bearings (16 and 17 respectively) arranged with axial spacing from one another, and in that the axes (13, 13', 13'') of rotation of the pivot bearings (12) on the axle body extend obliquely in plan view and intersect at least substantially at one point approximately in the central plane (14) of the vehicle with the pivot axes (11) on the vehicle body side of the longitudinal arms (4, 4', 4'').

2. A suspension system according to Claim 1 as a driven rear axle for a motor vehicle, wherein the differential gear is supported on the axis body, characterised in that the point (15') of intersection of the axes (13', 13'') of rotation and the pivot axes (11) is offset with respect to the longitudinal central plane (14) of the vehicle towards the crown wheel (23) of the differential gear.

3. A suspension system according to Claim 2, characterised in that the lateral offset (e) amounts to l/i, where l is the longitudinal distance of the pivot bearings (10) on the vehicle body from the wheel axis (24) and i is the reduction ratio of the differential gear.

4. A suspension system according to Claim 1, characterised in that the rubber-elastic pivot bearings (10) on the vehicle body have recesses or cut-out portions (26) in the horizontal direction.

5. A suspension system according to Claim 1, characterised in that the rotation axes (13) and the pivot axes (11) are staggered with respect to one another in such a way that their point (15) of intersection lies below the articulation (pivot bearings 10) of the longitudinal arms (4) of the vehicle body.

6. A suspension system according to Claim 1, characterised in that the lateral guidance arrangement is a Watt linkage the coupler (6) of which is mounted on the axle body (2'').

7. A suspension system according to Claim 1, characterised in that the lateral guidance arrangement is a Watt linkage the coupler (6) of which is mounted on the vehicle body (3).

### Revendications

1. Suspension d'essieu rigide pour véhicule comportant des corps d'essieu (2, 2', 2") rigides en torsion s'étendant principalement transversalement à la direction de déplacement, et dont chaque extrémité porte une roue (1) et qui est reliée et guidée par la carrosserie (3) du véhicule ou analogue par deux bras longitudinaux (4, 4', 4") latéraux, rigides en flexion et en torsion ainsi qu'un dispositif de guidage latéral (barre de Panhard 21, tringlerie de Watt 6, 7, 8) les deux bras longitudinaux (4, 4', 4") étant articulés dans des paliers de rotation (10) élastiques ayant un axe de basculement (11) pratiquement transversal et horizontal sur la carrosserie (3) du véhicule ainsi que par également des paliers de rotation (12) élastiques sur le corps de l'essieu (2, 2', 2"), caractérisée en ce qu'à la fois les paliers de rotation (10) du côté de la carrosserie que les paliers de rotation (12) du côté du corps de l'essieu sont formés par deux paliers en caoutchouc (16, 17) distants axialement l'un de l'autre et en ce que les axes de rotation (13, 13', 13") des paliers de rotation (12) du côté du corps de l'essieu sont inclinés en vue de dessus et coupent l'axe de basculement (11) des bras longitudinaux (4, 4', 4") sur la carrosserie sensiblement dans le plan médian (14) du véhicule au moins approximativement en un point (15, 15').

2. Suspension selon la revendication 1 appliquée à l'essieu arrière moteur d'un véhicule à moteur dont le différentiel s'appuie sur le corps de l'essieu, caractérisée en ce que le point d'intersection (15') des axes de rotation (13, 13") et des axes de basculement (11) est décalé par rapport au plan longitudinal médian (14) du véhicule du côté opposé à celui de la roue solaire (23) du différentiel.

3. Suspension selon la revendication 2, caractérisée en ce que le décalage latéral (e) correspond à l/i, l représentant la distance longitudinale entre le palier de rotation (12) appartenant à la carrosserie et l'axe (24) des roues et i représente le rapport de démultiplication du différentiel.

4. Suspension selon la revendication 1, caractérisée en ce que les paliers de rotation (10) élastiques appartenant à la carrosserie comportent des cavités (26) dans la direction horizontale.

5. Suspension selon la revendication 1, caractérisée en ce que les axes de rotation (13) et les axes de basculement (11) sont inclinés les uns par rapport aux autres de façon que leur point d'intersection (15) se trouve en dessous de l'articulation appartenant à la carrosserie (palier de rotation 10) des bras longitudinaux (4).

6. Suspension selon la revendication 1, caractérisée en ce que le dispositif de guidage latéral est une tringlerie de Watt dont l'élément de liaison (6) est monté sur le corps d'essieu (2").

7. Suspension selon la revendication 1, caractérisée en ce que le dispositif de guidage latéral est une tringlerie de Watt dont l'élément de liaison (6) est monté sur la carrosserie (3) du véhicule.

0 135 857

FIG.1

FIG.2

FIG.3

FIG.4

FIG.5

FIG.6